# EUROPEAN PATENT APPLICATION

(11) **EP 0 846 780 A2**
(43) Date of publication of application: **10.06.1998**
(21) Application number: 97121498.6
(22) Date of filing: 06.12.1997
(51) Int. Cl.: C21D 9/22, C21D 1/09, A01B 35/20, A01D 34/00

(54) **A method of making a self-sharpening metallic cutting blade or a cultivator swep and a cutting blade or a cultivator sweep**

(30) Priority: 09.12.1996 US 762177
(71) Applicant: DEERE & COMPANY, Moline Illinois 61265-8098 (US)
(72) Inventor: Boardman, Bruce Earl, Geneseo, Illinois 61254 (US); Hopkins, John William, Charlotte, North Caroline 28210 (US)
(74) Representative: Feldmann, Bernhard

(57) **Abstract**

A method of making a self-sharpening cutting blade (1) from a blank comprises the steps of: identifying a leading edge (12), designating a targeted portion (34) of the rear surface (14), and quickly heating the targeted portion including the leading edge (12). In addition, a cutting blade (1) has selectively hardened surfaces, allowing the blade to maintain its sharpness by promoting deterioration of underlying material (36) rather than of the leading edge (12).

## Description

The present invention relates to methods of making cutting blades. More particularly, the present invention relates to a method for surface hardening a targeted portion of a metallic cutting blade. Further, the present invention relates to cutting apparatus, and more particularly to an improved blade having a cutting edge which retains its sharpness longer than prior art cutting edges and resists chipping. A preferred embodiment of the invention relates to rotary lawn mower blades, and more particularly to an improved rotary lawn mower blade having the aforementioned advantages.

Under normal operating conditions, a cutting blade generally wears by deterioration of the leading portion of the cutting edge face, making the blade dull and decreasing its efficiency in performing its designated task. For example, a rotary cutting blade mounted on a lawn mower is subjected to sand and dirt particles which relatively quickly erode the cutting surface of present blades. As the blade wears, its cutting efficiency decreases. Eventually, the blade must be sharpened or replaced in order to effectively perform its assigned operation.

Previous attempts have been made to develop a blade which will effectively resist wear and abrasion. However, these attempts have generally concentrated on increasing the hardness of the entire blade or of the cutting edge face alone.

Application of a hardfacing alloy such as tungsten carbide is known for increasing the hardness of a cutting edge face. However, it has been found that the softer metal behind the hardfacing material on the cutting edge face wears away during operation, leaving the hardfacing material unsupported and resulting in a chipping or breaking away of the cutting edge. In addition, known hardfacing processes are relatively expensive.

It is also known to structurally modify the surfaces of metal bodies by raising their temperature above transformation temperature, and then quenching the bodies. Heat treatment and subsequent quenching of articles is known to increase hardness of articles, although heat treating an article in its entirety makes the article brittle and, when applied to a cutting blade, increases the likelihood that the cutting edge will chip and expel material. Also, quenching a heat treated article in a quenching fluid results in additional material and labor cost, and further expense is encountered in cleaning the fluid used to quench the article so that the fluid may be safely disposed of.

It is therefore an object of the present invention to provide a method for transforming a portion of a blade into a significantly harder structure to define a blade which performs its assigned operation reliably, provides a leading edge which has sufficient hardness to resist wear and abrasion and retain its sharpness for an extended period of time, and is not so brittle that the blade will excrete significant fragments during normal use. It is a further object of the present invention to define a rotary lawn mower blade having the advantages noted above. It is a still further object of the present invention to define a cultivator sweep featuring said advantages.

These and other objects are achieved, according to the invention, by defining a targeted area on a rear surface of a blade which includes the leading edge, then selectively hardening a thin layer of the targeted area. As a result, the blade is improved in that operational wear selectively removes underlying material rather than the hardened material of the targeted area. Thereby the blade is able to retain and even improve its sharpness during operation, since the leading edge remains intact, while maintaining substantially the same resistance to chipping as the underlying material.

In the present invention, impact is absorbed by unhardened portions (underlying material) of the blade backing the hardened surface areas. The underlying material is softer and less wear-resistant than the hardened surface areas of the blade. Thus, the article is much less brittle than prior art articles in which the entire article is hardened, as well as blades whose entire cutting edge face has been hardened.

In the following the invention is explained in greater detail on the basis of preferred embodiments with reference to the drawing.
- Figure 1: is a top view of a preferred embodiment of a rotary lawn mower blade according to the invention.
- Figure 2: is an end view of the rotary lawn mower blade taken along line 2-2 of Figure 1.
- Figure 3: is a an enlarged view of the area circumscribed by circle 3 in Figure 2.
- Figure 4: is a top view of a preferred embodiment of a cultivator sweep according to the invention.
- Figure 5: is a side view of the cultivator sweep of Figure 4.

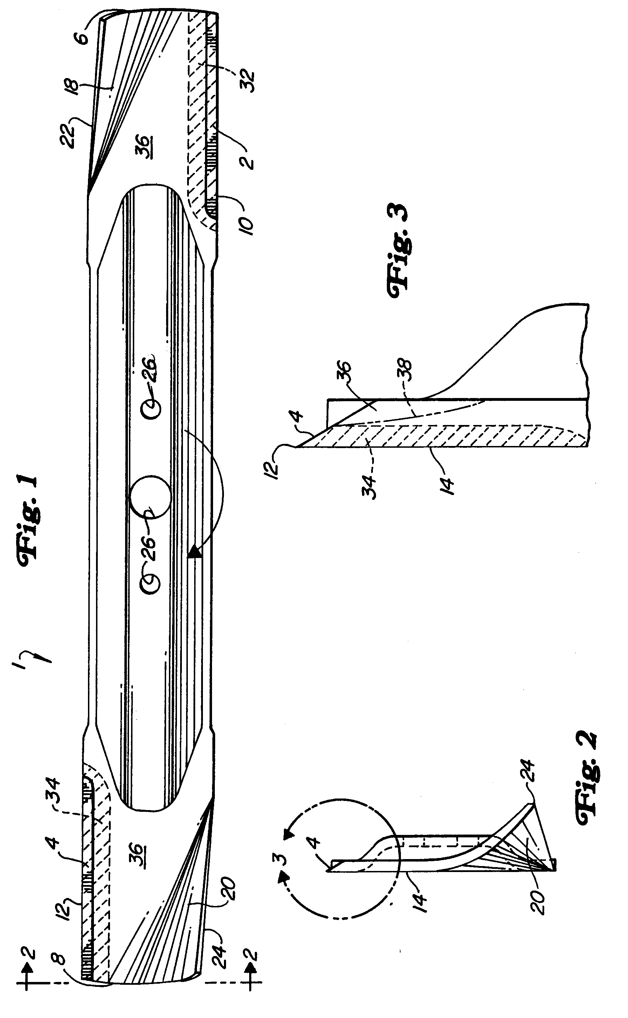

With reference to Figure 1, a rotary lawn mower blade 1 is shown according to a preferred embodiment of the present invention.

Cutting edge faces 2,4 extend inward from ends 6,8 of the blade 1. Leading edges 10, 12 are defined by the intersection of the cutting edge faces 2, 4 and a rear surface 14 on the bottom of the blade 1. Upwardly bent portions 18,20 extend inward from each of the ends 6,8 along trailing edges 22, 24 of the blade 1. Mounting holes 26 are provided for attaching the blade 1 to a motor (not shown). During operation, the blade 1 is designed to rotate clockwise as viewed from above in Figure 1 such that the leading edges 10, 12 make first contact with material to be cut.

Targeted areas 32, 34, shown as shaded regions in Figures 1 and 3, are relatively thin portions of the rear surface 14 including the leading edges 10, 12. Although the targeted areas 32, 34 are shown in Figure 1 as a relatively small segment of the rear surface 14, the entire rear surface 14 of the blade 1 can be hardened without departing from the scope of the invention. The thickness of the targeted areas 32, 34 as shown in Figure 3 must be relatively thin to present sufficiently sharp leading edges 10, 12 when an unhardened portion of the blade (underlying material 36) wears away. The surface hardening of the targeted areas 32, 34 is particularly simple if a laser is used to quickly heat the targeted areas 32, 34, which must then be cooled to transform the targeted areas 32, 34 into hardened regions. Although laser surface hardening is preferable, any person skilled in the art could utilize a variety of quick-heating means for hardening the targeted areas 32, 34, including any high-intensity surface heating source such as white light, induction, electron beam, and exposure to flame.

Although the thickness of the targeted area 34 is shown in exaggeration fashion in Figure 3 as about half the thickness of the blade 1, the targeted areas 32, 34 of the blade 1 are preferably hardened to a more shallow depth, allowing the underlying material 36 to operate as a heat sink and eliminating the need for quenching the blade 1 in a quenching fluid during the cooling step of the hardening process. This "self-quenching" may be achieved, in addition to other aforementioned advantages of the present invention, by hardening the targeted areas 32, 34 of the blade 1 in the order of 25% or less of the thickness of the blade 1, to a maximum in the order of 0.050". In order to achieve self-quenching without approaching the maximum allowable hardened thickness, it is suggested to harden the targeted areas 32, 34 of the blade to a thickness in the range of .001" to .015". In addition, the least possible wear of the leading edges 10, 12 and consequently the smallest loss in efficiency can be attained if the hardened targeted areas 32, 34 are thin relative to the thickness of the blade 1, again in the order or 25% or less of the thickness of the blade 1.

Over a period of operation of the blade 1, the abrasive action of sand and dirt particles, as well as material being cut causes the softer metal composing the underlying material 36 to eventually wear away inwardly of the leading edges 10, 12. Since the hardened targeted areas 32, 34 are substantially harder and more wear resistant than the underlying material 36, the leading edges 10, 12 wear away at a substantially slower rate and the cutting edge faces 2, 4 eventually assuming the general shape indicated in exaggerated fashion by the dotted line 38 in Figure 3.

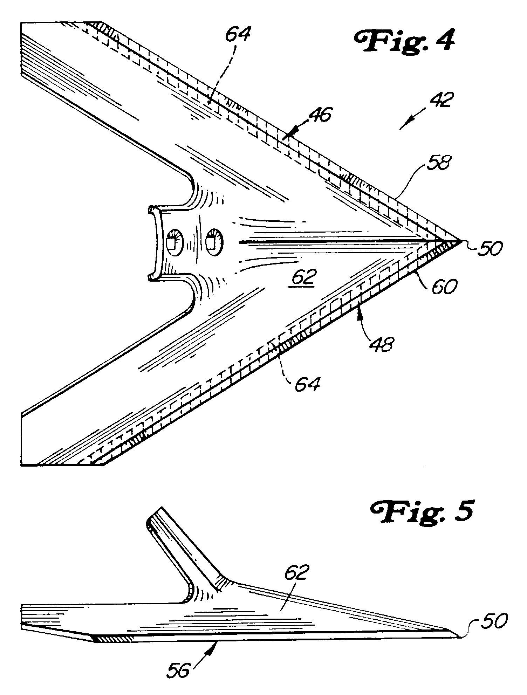

Figure 4 shows a preferred embodiment of a cultivator sweep 42 according to the present invention. The cultivator sweep 42 is portrayed as a triangular head having a pair of beveled outer edge faces 46, 48 diverging rearward from a nose region 50. A rear surface 56, shown in Figure 5, is provided adjacent to the beveled outer edge faces 46, 48. Leading edges 58, 60 are defined by the intersection of the rear surface 56 and each of the beveled outer edge faces 46, 48. A targeted area of the rear surface 56 including the leading edges 58, 60 is hardened with respect to underlying material 62 such that the underlying material 62 wears more readily than the leading edges 58, 60.

## Claims

1. A method of making a self-sharpening metallic cutting blade (1) or a cultivator sweep (42) from a blank having a cutting edge face (2, 4; 46, 48), a rear surface (14; 56) and underlying material (36; 62), said method comprising the steps of:
identifying a leading edge (10, 12; 58, 60) defined by the intersection of the cutting edge face (2, 4; 46, 48) and the rear surface (14; 56);
designating a targeted area (32, 34) of the rear surface (14; 56), said targeted area (32, 34) including the leading edge (10, 12; 58, 60) and excluding the underlying material (36; 62);
quickly heating the targeted area (32, 34) of the rear surface (14; 56); and
cooling the targeted area (32, 34) to transform the targeted area (32, 34) into a significantly more wear-resistant hardened targeted area (32, 34).

2. The method of claim 1, wherein the targeted area (32, 34) is cooled by self-quenching.

3. The method of claim 1, wherein said targeted portion of the rear surface (14; 56) is quickly heated by laser, by electron beam or by induction

4. The method of claim 1, wherein the thickness of the targeted area (32, 34) is less than 25% of the thickness of the blade (1)

5. The method of claim 4, wherein the targeted area (32, 34) is between 0.001" and 0.015" thick.

6. A cutting blade (1) or a cultivator sweep (42) produced by the method of any of the claims 1 through 5.

7. A lawn mower blade (1) or a cultivator sweep (42) comprising:
a cutting edge face (2, 4; 46, 48);
a rear surface (14; 56) adjacent to the cutting edge face (2, 4; 46, 48);
a leading edge (10, 12; 58, 60) defined by the intersection of the cutting edge face (2, 4; 46, 48) and the rear surface (14; 56); and
said leading edge (10, 12; 58, 60) and an adjacent portion of said rear surface (14; 56) having a wear resistance greater than underlying material (36, 62).

8. The lawn mower blade (1) or the cultivator sweep (42) of claim 7, wherein said blade (1) or sweep (42) is made of steel.

9. The lawn mower blade (1) or the cultivator sweep (42) of claim 7 or 8, wherein the thickness of the adjacent portion of said rear surface (14; 56) is less that 25% of the thickness of the blade (1) or the sweep (42).
